# FASCICULE DE BREVET EUROPEEN

(11) **EP 3 661 812 B1**
(45) Date de publication et mention de la délivrance du brevet: **28.04.2021**
(21) Numéro de dépôt: 18765695.4
(22) Date de dépôt: 09.08.2018
(51) Int. Cl.: B60R 19/18

(54) **ENSEMBLE PARE-CHOCS POUR VEHICULE AUTOMOBILE**
STOSSDÄMPFERANORDNUNG FÜR KRAFTFAHRZEUG
BUMPER ASSEMBLY FOR MOTOR VEHICLE

(30) Priorité: 01.09.2017 FR 1758081
(43) Date de publication de la demande: 10.06.2020
(73) Titulaire: Valeo Systemes Thermiques, 78322 Le Mesnil Saint-Denis Cedex (FR)
(72) Inventeur: TRABELSI, Hamed, 78180 Montigny-le-Bretonneux (FR); DA COSTA PITO, Sergio, 78322 Le Mesnil Saint Denis Cedex (FR); ANDRE, Stephane, 93012 Bobigny Cedex (FR); HERLEM, Jean-Paul, 78322 Le Mesnil Saint Denis Cedex (FR)
(74) Mandataire: Tran, Chi-Hai
(86) Numéro de dépôt international: PCT/FR2018/052044
(87) Numéro de publication internationale: WO 2019/043313

(56) Documents cités:
- EP-A1- 1 199 224
- FR-A1- 2 905 325
- FR-A1- 2 998 524
- GB-A- 1 550 100
- US-A- 4 623 182

## Description

La présente invention concerne le domaine des ensembles pare-chocs pour véhicules automobile.

Un véhicule automobile est couramment équipé d'ensembles pare-chocs disposés à l'avant et/ou à l'arrière du véhicule afin de protéger ce véhicule en cas de collision. Ces ensembles pare-chocs sont configurés pour absorber l'énergie cinétique dégagée lors de telles collisions et permettent ainsi de limiter les dégâts qu'elles peuvent engendrer, à la fois pour les usagers du véhicule et pour le véhicule lui-même.

Classiquement les ensembles pare-chocs sont réalisés au moins en partie en acier. Si ces ensembles pare-chocs sont peu chers, ils présentent l'inconvénient d'être très lourds, ce qui a notamment pour conséquence d'augmenter le poids total des véhicules auxquels ils sont intégrés et donc d'augmenter la consommation en carburant de ces véhicules alors que les contraintes environnementales invitent les acteurs du monde automobile à limiter l'impact des véhicules sur l'environnement, en particulier en ce qui concerne la consommation de carburant.

Il est également connu de réaliser ces ensembles pare-chocs en aluminium ou en un alliage d'aluminium. Ces ensembles pare-chocs sont alors plus légers mais beaucoup plus coûteux à la fabrication, et ne répondent donc pas aux exigences et aux contraintes du secteur automobile.

Depuis quelques années se sont ainsi développés des ensembles pare-chocs réalisés en matériau composite, notamment à base de matériau thermoplastique. L'utilisation de matériau composite permet d'obtenir des ensembles pare-chocs légers et pour un coût raisonnable. Toutefois, les matériaux composites ne permettent pas de réaliser des pièces complexes. Ces ensembles pare-chocs se décomposent ainsi en une multitude de pièces réalisées indépendamment les unes des autres avant d'être assemblées entre elles.

Une telle conception impose la fabrication d'autant d'outillages que de pièces à fabriquer, ce qui s'avère long et coûteux et ne permet pas d'obtenir une cadence de production suffisamment rentable. De plus, les zones de jonction entre les différentes pièces ainsi assemblées sont autant de points de faiblesse des ensembles pare-chocs ainsi réalisés EP1199224 A1 décrit un ensemble pare-chocs pour véhicule automobile selon le préambule de la revendication 1.

La présente invention s'inscrit dans ce contexte et propose un ensemble pare-chocs se décomposant en deux pièces principales solidarisées entre elles, ce qui permet d'améliorer la rentabilité des chaînes de production de ces ensembles pare-chocs et de réduire le nombre de zones de jonction au niveau desquelles ces ensembles pare-chocs sont fragilisés.

Un objet de la présente invention concerne ainsi un ensemble pare-chocs pour véhicule automobile comprenant une traverse, notamment destinée à s'étendre principalement selon un axe transversal du véhicule automobile, et deux amortisseurs de chocs, la traverse comportant une portion centrale comprise entre deux portions latérales agencées dans le prolongement des amortisseurs de chocs, la portion centrale de la traverse étant formée conjointement par une première demi-coque et une deuxième demi-coque configurées pour générer un corps creux une fois assemblées. Les portions latérales sont formées par le prolongement transversal de la première demi-coque de part et d'autre de la deuxième demi-coque.

En d'autres termes, la première demi-coque présente une dimension transversale supérieure à une dimension transversale de la deuxième demi-coque. On entend par « dimension transversale » une dimension mesurée parallèlement à l'axe transversal du véhicule sur lequel est destiné à être intégré l'ensemble pare-chocs.

La première demi-coque et la deuxième demi-coque peuvent être de forme identique ou de forme différente selon l'invention tant que ces deux demi-coques sont configurées pour générer un corps creux.

Lorsque cet ensemble pare-chocs est monté sur le véhicule, la première demi-coque est une demi-coque arrière et la deuxième demi-coque est une demi-coque avant, les termes « avant » et « arrière » devant s'entendre par rapport au sens de circulation dudit véhicule. On comprend donc que les impacts frontaux potentiellement subis par le véhicule seront d'abord absorbés par la deuxième demi-coque, située le plus en avant du véhicule.

Ces impacts frontaux peuvent être particulièrement dangereux pour le conducteur du véhicule et pour ses passagers, même à faible vitesse. Il est donc important que l'ensemble pare-chocs situé en face avant du véhicule soit capable d'absorber, au moins en partie, l'énergie dégagée lors de tels chocs. Le corps creux généré par l'assemblage de la première demi-coque et de la deuxième demi-coque de l'ensemble pare-chocs selon la présente invention permet avantageusement à la traverse de cet ensemble pare-chocs de se déformer en cas d'impact et d'absorber une partie de l'énergie, protégeant ainsi la structure du véhicule sur lequel elle est montée et donc l'intégrité physique du conducteur et de ses passagers.

On comprend que, selon l'invention, ce corps creux est généré au niveau de la portion centrale de la traverse, c'est-à-dire à l'endroit où le véhicule est le plus susceptible de subir un choc frontal.

Selon une caractéristique de la présente invention, la première demi-coque comprend une partie centrale et au moins une partie latérale, cette partie centrale et cette au moins une partie latérale formant un ensemble monobloc. On entend par « ensemble monobloc », le fait que la partie centrale et l'au moins une partie latérale de la première demi-coque forment un unique ensemble qui ne peut être séparé sans entrainer la détérioration de la partie centrale ou de l'au moins une partie latérale. On comprend que la partie centrale et la ou les parties latérales sont de section différente, autrement dit de forme différente.

Selon une caractéristique de la présente invention, la première demi-coque et la deuxième demi-coque comportent respectivement une face intérieure tournée vers l'autre demi-coque et délimitée par des bords périphériques, la première demi-coque et la deuxième demi-coque étant assemblées entre elles en une surface de liaison périphérique au niveau des bords périphériques de leurs faces intérieures.

Selon l'invention, la face intérieure de la première demi-coque et la face intérieure de la deuxième demi-coque présentent, chacune, une forme creuse. Lorsque la première demi-coque et la deuxième demi-coque sont assemblées entre elles, ces formes creuses se font face, générant ainsi le corps creux entre ces deux demi-coques.

Selon une autre caractéristique de la présente invention, la première demi-coque et la deuxième demi-coque sont solidarisées en une surface de liaison interne au niveau d'au moins une nervure ménagée sur au moins l'une des demi-coques.

Selon cette caractéristique, l'au moins une nervure est configurée pour s'étendre dans le corps creux généré lors de l'assemblage des deux demi-coques, c'est-à-dire que cette au moins une nervure s'étend depuis une face intérieure de l'une de ces demi-coques jusqu'à la face intérieure de l'autre demi-coque.

Selon un exemple de réalisation de la présente invention, l'au moins une nervure est ménagée sur la deuxième demi-coque.

Avantageusement, la deuxième demi-coque et l'au moins une nervure ménagée sur cette deuxième demi-coque peuvent former un unique ensemble qui ne peut être séparé sans occasionner la détérioration de l'une ou de l'autre.

Selon un aspect de la présente invention, l'ensemble pare-chocs peut comprendre une série de nervures qui s'étendent depuis la deuxième demi-coque jusqu'à la première demi-coque. Cette série de nervure peut être une série transversale de nervures avec un agencement d'une pluralité de nervures qui se succèdent le long de l'axe transversal.

Selon cet aspect de la présente invention, des saillies de renforcement peuvent s'étendre transversalement entre deux nervures successives de la série de nervures, et notamment entre deux nervures successives de la série transversale de nervures.

Ainsi deux nervures voisines de la série de nervures sont reliées entre elles par une saillie de renforcement. Ces saillies de renforcement permettent notamment de rigidifier et ainsi de rendre plus résistante la structure de la demi-coque sur laquelle est ménagée la série de nervures.

Selon une caractéristique de la présente invention, au moins une bande principale peut être ménagée sur la première demi-coque, cette bande principale s'étendant sur toute la dimension transversale de la partie centrale de cette première demi-coque et cette bande principale étant configurée pour permettre la solidarisation de la deuxième demi-coque sur la première demi-coque.

Par exemple cette au moins une bande principale peut être ménagée en regard d'extrémités des saillies de renforcement tournées à l'opposé de la deuxième demi-coque, lorsque les deux demi-coques sont assemblées l'une sur l'autre. Une zone de contact entre cette bande principale et ces extrémités des saillies de renforcement participe à former, au moins en partie, la surface de liaison interne entre les deux demi-coques.

Cumulativement ou alternativement, au moins une autre bande principale peut être ménagée au niveau de l'un des bords périphériques de la première demi-coque, cette au moins une autre bande principale participant alors à former, au moins en partie, la surface de liaison périphérique avec la deuxième demi-coque.

Selon une autre caractéristique de la présente invention, au moins une bande secondaire est ménagée sur la première demi-coque, cette au moins une bande secondaire étant ménagée en regard d'au moins l'une des nervures réalisées sur la deuxième demi-coque lorsque les deux demi-coques sont assemblées l'une sur l'autre. Avantageusement, la première demi-coque peut comprendre autant de bandes secondaires que la deuxième demi-coque comprend de nervures.

On comprend que ces bandes principales et ces bandes secondaires formées sur la première demi-coque forment un surplus de matière sur ladite première demi-coque, facilitant ainsi un assemblage de la première demi-coque et de la deuxième demi-coque par soudage consistant en une déformation à chaud, ciblée sur ces zones de surépaisseur.

Selon un aspect de la présente invention, la/les bande(s) principale(s) et/ou le/les bande(s)secondaire(s) sont issues de matière avec la première demi-coque.

Selon une caractéristique de la présente invention, le corps creux généré par l'assemblage des deux demi-coques s'étend sur toute une dimension transversale de la portion centrale de la traverse.

On comprend que selon cette caractéristique, les portions latérales de la traverse débutent immédiatement après ce corps creux. Il en va de même pour les amortisseurs de chocs rapportés sur ces portions latérales. Ainsi, le corps creux permet d'absorber les chocs subis par la portion centrale de la traverse tandis que les amortisseurs de chocs permettent d'absorber les chocs subis par les portions latérales de cette traverse. L'ensemble pare-chocs selon la présente invention permet ainsi de protéger efficacement l'ensemble de la face avant du véhicule sur lequel il est monté.

On entend par « absorber les chocs » le fait que la portion centrale et les amortisseurs de chocs sont configurés pour absorber l'énergie dégagée lors d'un choc en se déformant, protégeant ainsi la structure du véhicule sur lequel ils sont montés. Il est entendu que l'ensemble pare-chocs selon la présente invention permet essentiellement de protéger le véhicule contre des chocs subis à faibles vitesses.

Selon l'invention, les amortisseurs de chocs peuvent être assemblés sur les portions latérales de la traverse par des moyens de fixation réversibles.

Avantageusement, ces moyens de fixation réversibles permettent le remplacement de la traverse sur laquelle les amortisseurs de chocs sont fixés. En cas de choc endommageant la traverse, celle-ci peut être remplacée, indépendamment des amortisseurs de chocs, ce qui permet de réduire les coûts de réparation pour l'utilisateur final du véhicule sur lequel est monté l'ensemble pare-chocs selon la présente invention.

Selon l'invention, la première demi-coque et/ou la deuxième demi-coque comprennent un matériau composite. Par exemple, ce matériau composite peut être un matériau composite à matrice organique. Les matériaux composites peuvent également être des composites thermoplastiques renforcés de fibres de verre. Les matériaux composites peuvent être sélectionnés parmi les résines utilisées habituellement dans l'automobile (polypropylène, polyamide6) et le renfort peut occasionnellement être choisi parmi d'autres types de fibres comme le carbone, le kevlar, des fibres végétales/naturelles.

L'invention concerne également un véhicule automobile comprenant un ensemble pare-chocs selon la présente invention, les amortisseurs de chocs de cet ensemble pare-chocs étant interposés entre la traverse de l'ensemble pare-chocs et un longeron du véhicule automobile.

D'autres détails, caractéristiques et avantages ressortiront plus clairement à la lecture de la description détaillée donnée ci-après à titre indicatif, en relation avec les différents modes de réalisation illustrés sur les figures suivantes :
- la figure 1 est une vue en perspective d'un ensemble pare-chocs selon la présente invention comprenant une traverse et deux amortisseurs de chocs ;
- la figure 2 est une vue en éclaté de la traverse de l'ensemble pare-chocs illustré sur la figure 1 ;
- les figures 3 et 4 sont des vues partielles, en perspective, d'une première demi-coque et d'une deuxième demi-coque formant la traverse de l'ensemble pare-chocs selon la présente invention ;
- la figure 5 illustre une coupe de la traverse réalisée selon un plan longitudinal et vertical.

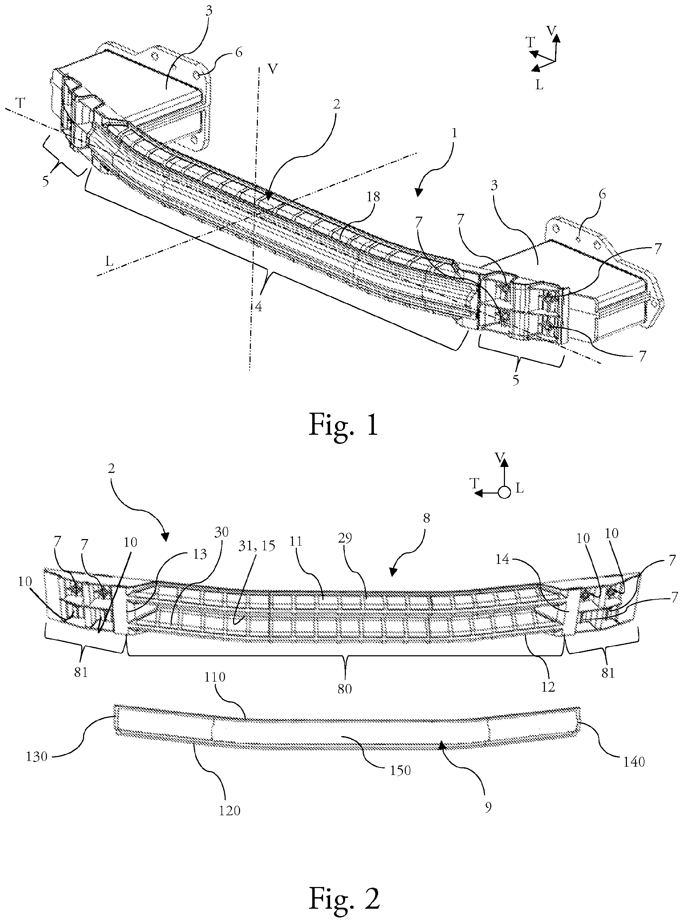

Dans la description qui va suivre, les dénominations longitudinale, transversale, verticale, horizontale, gauche, droite, supérieure, inférieure, avant et arrière se réfèrent à l'orientation, dans un trièdre L, V, T, d'un ensemble pare-chocs 1 illustré sur la figure 1. Dans ce repère, l'axe L représente un axe longitudinal du véhicule, correspondant à la direction principale d'avancement du véhicule, l'axe V représente un axe vertical du véhicule, perpendiculaire au plan de la route sur lequel roule le véhicule, et l'axe T représente un axe transversal, perpendiculaire à l'axe longitudinal et à l'axe vertical V décrits ci-dessus.

Les dénominations gauche et droite s'apprécient par rapport à une position le long de l'axe transversal T, de part et d'autre de l'axe longitudinal L. L'axe vertical V symbolise une direction verticale, parallèle à l'axe V du trièdre, et qui est Les dénominations supérieure ou inférieure se rapportent à des orientations le long de l'axe vertical V. Enfin les dénominations avant ou arrière se réfèrent à des orientations le long de l'axe longitudinal L, en référence au sens de circulation du véhicule sur lequel est monté l'ensemble pare-chocs 1.

La figure 1 est une vue en perspective de l'ensemble pare-chocs 1 selon la présente invention comprenant une traverse 2 et deux amortisseurs de chocs 3. Selon la présente invention, cet ensemble pare-chocs 1 est réalisé, au moins en partie, en un matériau composite. A titre d'exemple non limitatif, cet ensemble pare-chocs 1 peut être réalisé en un matériau composite à matrice organique.

Tel qu'illustré sur les figures, la traverse 2 s'étend principalement selon l'axe transversal T et comprend une portion centrale 4 et deux portions latérales 5 situées de part et d'autre de cette portion centrale 4, le long de l'axe transversal T.

Chaque portion latérale 5 de la traverse est disposée dans le prolongement longitudinal de l'un des amortisseurs de chocs 3. Ces amortisseurs de chocs 3 présentent respectivement une forme sensiblement trapézoïdale et sont symétriques par rapport à un plan longitudinal et vertical médian, c'est-à-dire un plan passant par un centre du véhicule sur lequel est destiné à être monté l'ensemble pare-chocs selon l'invention.

Chacun de ces amortisseurs de chocs 3 comprend des organes de fixation 6 configurés pour permettre la fixation de l'ensemble pare-chocs 1 à des éléments de structure du véhicule automobile. Plus précisément, l'ensemble pare-chocs 1 est destiné à être intégré sur une face avant du véhicule automobile, les amortisseurs de chocs 3 étant alors interposés entre un longeron dudit véhicule automobile et la traverse 2. Les moyens de fixation 6 réalisés sur les amortisseurs de chocs 3 permettent ainsi de fixer l'ensemble pare-chocs 1 sur des longerons participant à définir la structure avant du véhicule automobile.

Tel que cela est par exemple visible sur la figure 1, ces moyens de fixation 6 peuvent par exemple être des platines de fixation qui s'étendent principalement dans un plan transversal et vertical, et qui sont disposées à une extrémité longitudinale arrière, c'est-à-dire le long de l'axe longitudinal L, de chacun des amortisseurs de chocs 3. Autrement dit, chaque moyen de fixation 6 est disposé à une extrémité des amortisseurs de choc 3 située à l'opposé de la traverse 2.

Les amortisseurs de chocs 3 de l'ensemble pare-chocs 1 sont configurés pour absorber l'énergie dégagée lors d'un choc entre le véhicule automobile sur lequel est intégré l'ensemble pare-chocs 1 et un objet extérieur à ce véhicule automobile. Ces amortisseurs de chocs 3 permettent ainsi, par leur déformation, d'absorber l'énergie dégagée et limitent ainsi les dégâts subis par le véhicule automobile et par ses occupants lors de tels chocs.

Avantageusement, l'ensemble pare-chocs 1 selon la présente invention permet de laisser intacte la structure du véhicule en cas de collision à basse vitesse. On entend par « basse vitesse » une vitesse au moins inférieure à 15 km/h.

L'ensemble pare-chocs comprend en outre des moyens de fixation 7 réversibles configurés pour permettre la fixation des amortisseurs de chocs 3 sur les portions latérales 5 de la traverse 2. Selon un exemple de réalisation illustré sur la figure 1, quatre moyens de fixation 7 réversibles sont prévus au niveau de chaque portion latérale 5 de la traverse 2. De par l'orientation de l'ensemble pare-chocs 1 sur la figure 1, les moyens de fixation 7 ne sont visibles et référencés que pour l'un des deux amortisseurs de chocs 3 mais on comprend qu'ils sont identiques sur l'autre amortisseur de chocs 3.

Chaque amortisseur de choc 3 comporte ainsi, selon l'exemple illustré, des alésages taraudés dimensionnés pour recevoir des vis formant les moyens de fixation 7 réversibles.

On comprend que ces moyens de fixation 7 étant réversibles, la traverse 2 est amovible. Ainsi, en cas de choc frontal, la traverse 2, qui peut alors être endommagée, peut être facilement remplacée, sans que ces amortisseurs de chocs 3 n'aient à l'être, réduisant ainsi les coûts de réparation engendrés pour l'utilisateur final du véhicule.

Selon l'exemple de réalisation illustré sur la figure 1, l'ensemble pare-chocs 1 présente un plan de symétrie longitudinal et vertical. En d'autres termes, une première partie de cet ensemble pare-chocs 1, formée de la moitié de traverse 2 et de l'amortisseur de chocs 3 disposés à gauche du plan longitudinal et vertical médian précédemment défini, est l'image miroir d'une deuxième partie de cet ensemble pare-chocs 1, formée de l'autre moitié de traverse et de l'amortisseur de chocs disposés à droite de ce plan longitudinal et vertical médian.

Nous allons maintenant décrire plus en détails la traverse 2 de l'ensemble pare-chocs 1 selon la présente invention en référence aux figures 2 à 5.

La figure 2 est une vue en éclaté de la traverse 2 de l'ensemble pare-chocs selon la présente invention. Tel que cela est visible, cette traverse 2 comprend une première demi-coque 8, dite « demi-coque arrière » et une deuxième demi-coque 9, dite « demi-coque avant ». On comprend donc que lorsque l'ensemble pare-chocs 1 selon la présente invention est monté sur un véhicule, la deuxième demi-coque 9 est disposée en aval de la première demi-coque 8, le terme « en aval » devant ici être entendu par rapport au sens de circulation du véhicule sur lequel est monté l'ensemble pare-chocs 1. Autrement dit, en cas de choc frontal, la deuxième demi-coque 9 est la plus exposée des deux demi-coques 8, 9.

Chaque demi-coque 8, 9 s'étend principalement selon l'axe transversal T. Tel qu'illustré, la première demi-coque 8 s'étend, transversalement, de part et d'autre de la deuxième demi-coque 9. La première demi-coque 8 présente à cet effet une dimension transversale supérieure à une dimension transversale de la deuxième demi-coque 9.

La première demi-coque 8 comprend une partie centrale 80, participant à former la portion centrale 4 de la traverse avec la deuxième demi-coque 9, et deux parties latérales 81 disposées transversalement de part et d'autre de la partie centrale 80 et formant, à elles seules, les portions latérales 5 de la traverse. En d'autres termes, la partie centrale 80 de la première demi-coque 8 est délimitée, transversalement, par chacune des parties latérales 81.

Cette première demi-coque 8 est une pièce monobloc, c'est-à-dire que la partie centrale 80 et les parties latérales 81 de cette première demi-coque 8 forment un unique ensemble qui ne peut être séparé sans occasionner la détérioration de la partie centrale 80 ou de l'une des parties latérales 81.

Tel que mentionné ci-dessus, les parties latérales 81 de la première demi-coque forment les portions latérales de l'ensemble pare-chocs, de sorte que l'on comprend que les amortisseurs de chocs sont fixés sur ces parties latérales 81. Ces dernières portent ainsi au moins une partie des moyens de fixation 7 configurés pour permettre la fixation réversible des amortisseurs de chocs. Ces moyens de fixation 7 sont agencés dans des renfoncements 10 ménagés dans chacune des parties latérales 81 de la première demi-coque 8. Selon l'exemple illustré sur la figure 2, quatre renfoncements 10 sont ménagés dans chaque partie latérale 81 de cette première demi-coque 8. Ces renfoncements 10 permettent de protéger, notamment des intempéries, les moyens de fixation 7 qui y sont logés afin d'améliorer la longévité de ceux-ci.

Tel que mentionné ci-dessus, l'ensemble pare-chocs selon la présente invention présente un plan de symétrie. On comprend donc que les parties latérales 81 de la première demi-coque 8 sont symétriques l'une de l'autre, les références indiquées sur les figures pour l'une étant donc transposables à l'autre.

La partie centrale 80 de la première demi-coque 8 comprend une face intérieure tournée vers la deuxième demi-coque 9 et délimitée verticalement par un bord périphérique supérieur 11 et par un bord périphérique inférieur 12. Transversalement, la face intérieure de la partie centrale 80 de cette première demi-coque 8 est délimitée par un premier bord périphérique latéral 13 et par un deuxième bord périphérique latéral 14. On comprend que le premier bord périphérique latéral 13 est commun à la partie centrale 80 et à l'une des parties latérales 81 tandis que le deuxième bord périphérique latéral 14 est commun à la partie centrale 80 et à l'autre partie latérale 81. La partie centrale 80 de cette première demi-coque 8 présente en outre une forme ondulée avec un bossage supérieur 29 qui s'étend depuis le bord périphérique supérieur 11, un bossage inférieur 30 qui s'étend depuis le bord périphérique inférieur 12 et une cavité 31 qui s'étend quant à elle entre le bossage supérieur 29 et le bossage inférieur 30. Cette partie centrale 80 comprend enfin une paroi de fond 15 formée par un fond de la cavité 31 et qui délimite longitudinalement cette partie centrale 80. En d'autres termes, la paroi de fond 15 de la partie centrale 80 de la première demi-coque 8 est prolongée d'une part par le bossage supérieur 29 et d'autre part par le bossage inférieur 30 de cette partie centrale 80.

La deuxième demi-coque 9 est dimensionnée pour pouvoir être disposée entre les parties latérales 81 de la première demi-coque 8, contre la partie centrale 80. En d'autres termes, la dimension transversale de cette deuxième demi-coque 9 est sensiblement égale à une dimension transversale de la partie centrale 80 de la première demi-coque 8.

Cette deuxième demi-coque 9 est également une pièce monobloc et comprend une face intérieure tournée vers la première demi-coque 8, cette face intérieure étant délimitée verticalement par un bord périphérique supérieur 110 et par un bord périphérique inférieur 120 et transversalement par un premier bord périphérique latéral 130 et par un deuxième bord périphérique latéral 140. Cette deuxième demi-coque 9 comporte un bossage central, vers l'avant du véhicule sur lequel est destiné à être monté l'ensemble pare-chocs, qui participe à définir une paroi avant 150 située à une extrémité longitudinale de cette deuxième demi-coque 9.

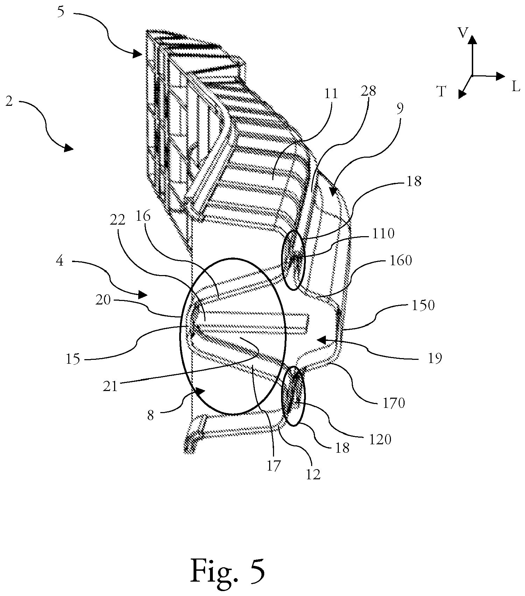

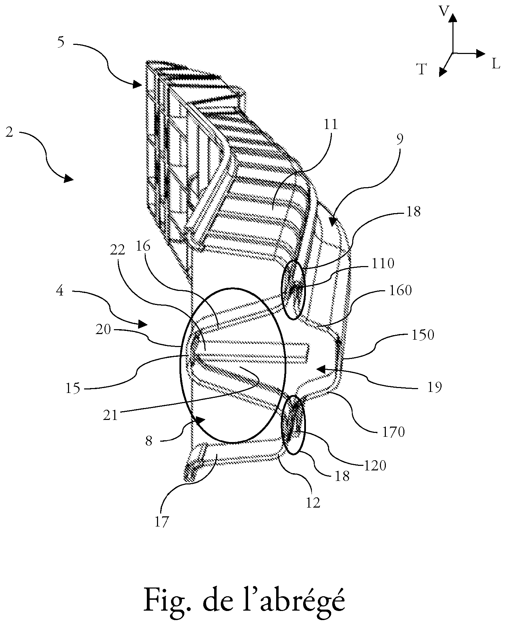

Selon l'invention, la première demi-coque 8 et la deuxième demi-coque 9 sont assemblées entre elles en une surface de liaison périphérique 18 formée par une partie de ces bords périphériques. Cette surface de liaison périphérique 18 est par exemple visible sur les figures 1 et 5.

On remarque également sur la figure 2 que chaque demi-coque 8, 9 présente une forme bombée autour de l'axe vertical V, la forme de la deuxième demi-coque 9 étant adaptée à la forme de la portion centrale 80 de la première demi-coque 8. En d'autres termes, la première demi-coque 8 et la deuxième demi-coque 9 présentent des rayons de courbure sensiblement équivalents.

Cette courbure permet notamment à l'ensemble pare-chocs selon la présente invention de s'adapter à la forme de la face avant du véhicule sur lequel il est destiné à être monté. Avantageusement, cette courbure permet également d'augmenter la flexibilité de la traverse 2 de l'ensemble pare-chocs ce qui améliore la résistance de cet ensemble pare-chocs aux petits chocs.

La première demi-coque 8 et la deuxième demi-coque 9 sont configurées pour former un corps creux une fois assemblées. On comprend que ce corps creux s'étend longitudinalement, c'est-à-dire le long de l'axe longitudinal L, entre la paroi de fond 15 de la première demi-coque 8 et la paroi avant 150 de la deuxième demi-coque 9 lorsque ces demi-coques 8, 9 sont assemblées entre elles. En d'autres termes, ce corps creux est défini par un espace ménagé entre la paroi de fond 15 de la première demi-coque 8 et la paroi avant 150 de la deuxième demi-coque 9.

Ce corps creux permet notamment d'absorber une partie de l'énergie dégagée lors d'un choc frontal et sera plus amplement décrit ci-après, notamment en référence à la figure 5.

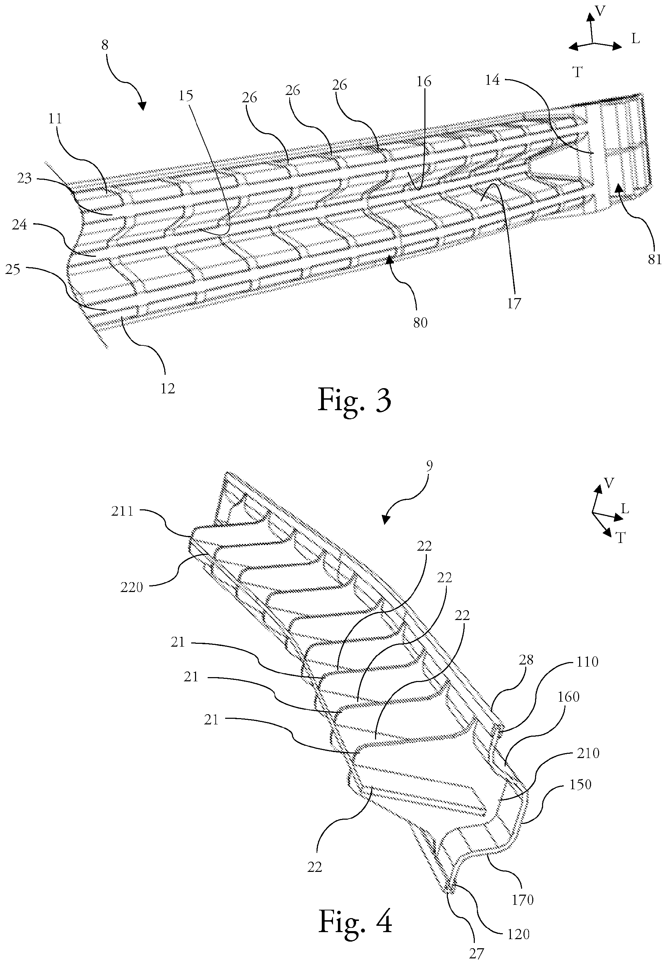

La figure 3 est une vue en perspective d'une moitié de la première demi-coque 8. Tel que précédemment mentionné, cette première demi-coque 8 présente une forme ondulée.

Ainsi, chacun de ses bords périphériques supérieur et inférieur 11, 12 comprend une première portion 32, 320 qui s'étend principalement dans un plan transversal et vertical et une deuxième portion 33, 330 qui s'étend dans un plan horizontal, c'est-à-dire un plan longitudinal et transversal.

On remarque que, dans une coupe réalisée selon un plan transversal et vertical, par exemple illustrée sur la figure 5, la première portion 32 du bord périphérique supérieur 11 et la première portion 320 du bord périphérique inférieur 12 s'étendent dans un même plan, tandis que la deuxième portion 33 du bord périphérique supérieur 11 et la deuxième portion 330 du bord périphérique inférieur 12 s'inscrivent dans deux plans distincts, sensiblement parallèles.

On comprend que les bords supérieurs et inférieurs de chacune des demi-coques suivent le rayon de courbure de la traverse mentionné ci-dessus, et que ces bords supérieurs et inférieurs s'inscrivent en réalité dans plusieurs plans sécants entre eux, mais principalement dans les plans cités ci-dessus.

La première demi-coque 8 comprend en outre une paroi interne supérieure 16 reliant le bord périphérique supérieur 11 à la paroi de fond 15 de cette première demi-coque 8 et une paroi interne inférieure 17 reliant le bord périphérique inférieur 12 de cette première demi-coque 8 à sa paroi de fond 15. Plus précisément, la paroi interne supérieure 16 relie la première portion 32 du bord périphérique supérieur 11 à la paroi de fond 15 et la paroi interne inférieure 17 relie quant à elle la première portion 320 du bord périphérique inférieur 12 à la paroi de fond 15.

Tel que représenté sur cette figure 3, la première demi-coque 8 comprend en outre une pluralité de bandes de surépaisseur de matière, ces bandes pouvant par exemple être issues de matière avec cette première demi-coque 8.

On distingue tout d'abord trois bandes principales 23, 24, 25, s'étendant selon des directions sensiblement parallèles à l'axe transversal T. Une première bande 23 est ainsi ménagée sur le bord périphérique supérieur 11, et plus précisément sur la première portion 32 de ce bord périphérique supérieur 11, une deuxième bande 24 est ménagée sur la paroi de fond 15 de cette première demi-coque 8 et une troisième bande 25 est quant à elle ménagée sur le bord périphérique inférieur 12, également sur la première portion 320 de ce bord périphérique inférieur 12.

Selon un exemple illustré sur la figure 3, chacune de ces bandes principales 23, 24, 25 s'étend depuis le premier bord périphérique latéral - non représenté sur cette figure - et jusqu'au deuxième bord périphérique latéral 14. Autrement dit, chacune de ces bandes principales 23, 24, 25 présente une dimension transversale égale ou sensiblement égale à la dimension transversale de la partie centrale 80 de la première demi-coque 8.

On comprend que la première bande 23 et la troisième bande 25 participent toutes deux à la surface de liaison périphérique tandis que la deuxième bande 24 participe à une surface de liaison interne qui sera plus amplement décrite ci-après, notamment en référence à la figure 5.

Ces trois bandes principales 23, 24, 25 sont reliées entre elles par une série de bandes secondaires de surépaisseur de matière 26, cette série de bandes secondaires 26 épousant la forme ondulée de la première demi-coque 8. Pour ne pas surcharger la figure 3, seule une partie de ces bandes secondaires 26 sont référencées.

Chacune de ces bandes secondaires 26 s'étend de façon ininterrompue depuis la deuxième portion 33 du bord supérieur 11 de la première demi-coque 8, jusqu'à la deuxième portion 330 de son bord inférieur 12, en épousant la forme de cette première demi-coque 8. On comprend donc que chaque bande secondaire 26 coupe chacune des bandes principales 23, 24, 25 au moins une fois. Selon un exemple de réalisation illustré sur la figure 3, ces bandes secondaires 26 sont agencées, au moins pour partie, perpendiculairement aux bandes principales 23, 24, 25.

Ces bandes secondaires 26 s'étendent ainsi en partie le long des parois internes supérieure et inférieure 16, 17 de la première demi-coque 8 et participent, avec la deuxième bande principale 24, à la surface de liaison interne.

La figure 4 est une vue en perspective de la deuxième demi-coque 9. Plus exactement, cette figure 4 illustre une moitié de cette deuxième demi-coque 9, mais tel que précédemment mentionné, l'autre moitié de cette deuxième demi-coque est symétrique à la moitié représentée sur cette figure.

Tel qu'illustré, cette deuxième demi-coque 9 comprend une paroi externe supérieure 160 reliant le bord périphérique supérieur 110 de cette deuxième demi-coque 9 à sa paroi avant 150 et une paroi externe inférieure 170 reliant le bord périphérique inférieur 120 de cette deuxième demi-coque 9 à sa paroi avant 150.

Selon l'invention, la deuxième demi-coque 9 comprend une série, par exemple transversale, de nervures 21 dont chaque nervure 21 émerge de la deuxième demi-coque 9 par une première extrémité 210 et s'étend longitudinalement, présentant dès lors une deuxième extrémité 211 libre. On entend par « série transversale de nervures » des nervures disposées les unes après les autres le long de l'axe transversal T. Cette série de nervures 21 est destiné à former une partie d'une surface de liaison interne au niveau de laquelle la première demi-coque 8 et la deuxième demi-coque 9 sont solidarisées, tel que cela sera plus amplement détaillé ci-après.

Avantageusement, la deuxième demi-coque 9 comprend ainsi autant de nervures 21 que la première demi-coque 8 comprend de bandes secondaires 26, chaque nervure 21 étant solidarisée à l'une de ces bandes secondaires 26 pour former, en partie, la surface de liaison interne entre les demi-coques 8, 9. Ainsi, les nervures 21 sont positionnées sur la deuxième demi-coque 9 avec un écartement identique, ou sensiblement identique, à l'écartement ménagé entre deux bandes secondaires 26 successives, ces écartements étant mesurés selon l'axe transversal T. Ainsi, lorsque les deux demi-coques sont assemblées, chaque nervure 21 fait face à l'une des bandes secondaires 26, ce qui facilite la solidarisation des demi-coques 7, 8 entre elles.

Selon un exemple de réalisation illustré sur cette figure 4, la série transversale de nervures 21 s'étend sur toute la dimension transversale de la deuxième demi-coque 9. Selon cet exemple de réalisation, la série de nervures 21 est issue de matière avec la deuxième demi-coque 9 et chaque nervure 21 de cette série de nervures 21 prend naissance pour partie de la paroi avant 150 et pour partie des parois externes 160, 170 de cette deuxième demi-coque 9. Selon un exemple de réalisation illustré sur cette figure 4, les nervures 21 sont réparties régulièrement le long de la dimension transversale de la deuxième demi-coque 9. Autrement dit, chaque nervure 21 est disposée à égale distance de la nervure 21 qui la précède et de celle qui lui succède.

Entre chaque nervure 21 est disposée une saillie de renforcement 22. En d'autres termes, une saillie de renforcement 22 est disposée entre deux nervures 21 successives, chaque nervure 21 étant ainsi reliée à la nervure 21 suivante par l'une des saillies de renforcement 22 et à la nervure 21 précédente par une autre de ces saillies de renforcement 22.

Ces saillies de renforcement 22 permettent notamment de rigidifier la deuxième demi-coque 9 et la rendent ainsi plus résistante aux chocs, tout en lui permettant de garder un certain degré de déformabilité lui permettant d'absorber des chocs plus importants. Avantageusement, ces saillies de renforcement 22 permettent également d'augmenter la surface de contact avec la paroi de fond 15 de la première demi-coque 8 lorsque les deux demi-coques 8, 9 sont assemblées entre elles. En effet, tel qu'illustré, ces saillies de renforcement 22 s'étendent longitudinalement de sorte que l'une de leurs extrémités, à savoir leur extrémité 220 tournée à l'opposé de la paroi avant 150 de la deuxième demi-coque 9, soit dans le même plan que des extrémités libres 210 des nervures 21 de cette deuxième demi-coque 9.

On remarque également sur cette figure 4 qu'un rail inférieur 27 recouvre le bord périphérique inférieur 120 de cette deuxième demi-coque 9 et qu'un rail supérieur 28 recouvre son bord périphérique supérieur 110. Ces rails 27, 28, présentent tous les deux une forme de U configuré pour respectivement recevoir le bord périphérique inférieur 120 et le bord périphérique supérieur 110 de la deuxième demi-coque 9.

Ces rails 27, 28 comprennent ainsi deux branches reliées entre elles par un fond. Tel qu'illustré sur la figure 5, l'une des branches de chacun de ces rails 27, 28 étant destinée à former la surface de liaison périphérique au niveau de laquelle la deuxième demi-coque 9 est solidarisée sur la première demi-coque. On comprend que l'autre branche de chacun de ces rails en « U » est tournée vers l'extérieur du véhicule sur lequel est intégré l'ensemble pare-chocs comprenant cette deuxième demi-coque 9.

On comprend qu'en pratique, la surface de liaison périphérique n'est donc pas directement réalisée par les bords périphériques supérieur et inférieur 110, 120 de la deuxième demi-coque 9 mais par l'une des branche de chacun des rails 27, 28 qui recouvrent ces bords périphériques supérieur et inférieur 110, 120.

Selon un exemple de réalisation de la présente invention, ces rails 27, 28 sont issus de matière avec la deuxième demi-coque 9 et réalisent ainsi un apport de matière nécessaire au soudage des deux demi-coques 8, 9 entre elles.

La figure 5 est une vue en coupe d'une portion de la traverse 2 de l'ensemble pare-chocs selon la présente invention, cette coupe étant réalisée selon le plan longitudinal et vertical médian précédemment défini. Cette figure 5 rend visible une moitié de la portion centrale 4 de la traverse 2 ainsi que l'une des portions latérales 5 de cette traverse 2. Tel que précédemment mentionné, l'ensemble pare-chocs, et donc la traverse 2, est symétrique par rapport à ce plan longitudinal et vertical médian. On comprend que la figure 5 n'illustre qu'une moitié de cette traverse 2 mais que, du fait de cette symétrie, la description qui va suivre est transposable à une autre moitié de cette traverse 2.

Comme on peut le voir sur cette figure 5, la deuxième demi-coque 9 présente une dimension verticale qui est inférieure à une dimension verticale de la première demi-coque 8.

Les bords périphériques supérieur et inférieur 110, 120 de la deuxième demi-coque 9 s'étendent tous deux principalement, pour un plan de coupe donné, dans un plan transversal et vertical. En revanche, et tel que précédemment décrit, les bords périphériques supérieur et inférieur 11, 12 comprennent respectivement la première portion 32, 320 qui s'étend principalement dans le plan transversal et vertical parallèle au plan dans lequel s'inscrivent les bords périphériques supérieur et inférieur 110, 120 de la deuxième demi-coque 9 et la deuxième portion 33, 330 qui s'étend dans le plan horizontal, tel que précédemment défini.

Tel que précédemment mentionné, la première demi-coque 8 et la deuxième demi-coque 9 sont solidarisées entre elles au niveau d'une surface de liaison périphérique 18. Tel qu'illustré sur la figure 5, cette surface de liaison périphérique 18 est formée par les bords périphériques de la première demi-coque 8 et par les rails inférieur et supérieur 27, 28 recouvrant les bords périphériques de la deuxième demi-coque 9. Comme on peut le voir sur cette figure 5, le bord périphérique supérieur 11 de la première demi-coque 8 est solidarisé sur le rail supérieur 28 recouvrant le bord périphérique supérieur 110 de la deuxième demi-coque 9 et le bord périphérique inférieur 12 de la première demi-coque 8 est solidarisé sur le rail inférieur 27 recouvrant le bord périphérique inférieur 120 de la deuxième demi-coque 9, lorsque ces rails vont être portés à fusion dans une opération de soudage des deux demi-coques entre elles. On comprend que cette surface de liaison périphérique 18 peut s'étendre sur toute ou partie d'une dimension transversale de la deuxième demi-coque 9.

Tel que précédemment décrit, la solidarisation de la première demi-coque 8 sur la deuxième demi-coque 9 génère un corps creux 19. Plus exactement, ce corps creux 19 est généré lorsque la cavité 31 ménagée dans la première demi-coque 8, et le bossage de la paroi avant 150 de la deuxième demi-coque 9 sont mises en face l'une de l'autre.

Ce corps creux 19 permet notamment à la traverse 2 de se déformer en cas de choc, et ainsi d'absorber une plus grande quantité de l'énergie dégagée lors dudit choc, préservant ainsi, au moins en partie, la structure du véhicule sur lequel est monté l'ensemble pare-chocs comprenant cette traverse 2.

Lorsque la première demi-coque 8 et la deuxième demi-coque 9 sont assemblées entre elles, chaque nervure 21 s'étend de la paroi avant 150 de la deuxième demi-coque 9, jusqu'à la paroi de fond 150 de la première demi-coque 8, c'est-à-dire que chaque nervure s'étend à travers le corps creux 19, sur toute une dimension longitudinale de ce corps creux 19, permettant des rigidifications ponctuelles de la traverse régulièrement réparties transversalement.

Selon un exemple de réalisation de la présente invention, le corps creux 19 s'étend sur toute la dimension transversale de la deuxième demi-coque 9. Cette deuxième demi-coque 9 s'étendant sur toute la dimension transversale de la partie centrale de la première demi-coque 8, on comprend que ce corps creux 19 s'étend ainsi sur toute la dimension transversale de cette partie centrale.

Selon cet exemple de réalisation, les amortisseurs de chocs, disposés dans le prolongement des parties latérales de la première demi-coque 8, sont positionnés transversalement immédiatement après la partie centrale de cette première demi-coque 8, c'est-à-dire immédiatement après le corps creux 19 formé par l'assemblage de la première demi-coque 8 sur la deuxième demi-coque 9.

Avantageusement, cet exemple de réalisation permet donc une protection particulièrement efficace de la face avant du véhicule sur lequel est monté l'ensemble pare-chocs puisque les chocs subis par la portion centrale de cet ensemble pare-chocs sont absorbés par le corps creux 19 tandis que les chocs subis par les portions latérales de cet ensemble pare-chocs sont absorbés par les amortisseurs de chocs disposés au niveau de ces portions latérales. Ainsi, en cas de choc, seule une portion de l'ensemble pare-chocs devra être changée.

Comme on peut le voir sur la figure 5, la première demi-coque 8 et la deuxième demi-coque 9 présentent également une surface de liaison interne 20. On comprend que cette surface de liaison interne 20 peut s'étendre sur toute ou partie de la dimension transversale de la deuxième demi-coque 9, à l'intérieur du corps creux.

Cette surface de liaison interne 20 est réalisée par le soudage des saillies de renforcement 22 ménagées sur la deuxième demi-coque 9 avec la deuxième bande 24 ménagée sur la paroi de fond 15 de la première demi-coque 8 ainsi que par le soudage des nervures 21 avec une partie des bandes secondaires 26 ménagées sur la première demi-coque 8.

On comprend de ce qui précède que la surface de liaison interne 20 s'étend depuis le bord supérieur 11 de la première demi-coque 8 jusqu'au bord inférieur 12 de cette première demi-coque, en longeant les parois internes 16, 17 ainsi que la paroi de fond 15 de cette première demi-coque 8. Plus précisément, cette surface de liaison interne s'étend de la première portion du bord périphérique supérieur 11 jusqu'à la première portion du bord périphérique inférieur 12.

Tel que précédemment mentionné, la première demi-coque 8 et la deuxième demi-coque 9 peuvent être solidarisées par soudage. La première demi-coque 8 et la deuxième demi-coque 9 sont tout d'abord chauffées, et notamment par un chauffage ciblé sur les zones de liaison centrale et périphérique. Lorsque ces zones atteignent la température souhaitée, les deux demi-coques 8, 9 sont pressées l'une contre l'autre afin de réaliser le soudage.

Ainsi, la première bande principale 23 et la troisième bande principale 25 réalisées sur la première demi-coque 8 se solidarisent avec, respectivement, le rail supérieur 28 recouvrant le bord périphérique supérieur 110 de la deuxième demi-coque 9 et le rail inférieur 27 recouvrant le bord périphérique inférieur 120 de cette deuxième demi-coque 9. Dans le même temps, la deuxième bande principale 24 est solidarisée avec les extrémités 220 des saillies de renforcement 22 tournées à l'opposé de la deuxième demi-coque 9 et les bandes secondaires 26 sont quant à elles solidarisées avec les extrémités libres 210 des nervures 21.

On comprend de ce qui précède que la présente invention propose un ensemble pare-chocs en matériau composite, simple à fabriquer puisqu'il ne comprend que deux éléments, en plus des amortisseurs de chocs, capable de résister aux chocs subis par le véhicule sur lequel il est monté et facilement remplaçable en cas d'impact qui l'endommagerait.

## Revendications

1. Ensemble pare-chocs (1) pour véhicule automobile comprenant une traverse (2) et deux amortisseurs de chocs (3), dans lequel la traverse (2) comporte une portion centrale (4) comprise entre deux portions latérales (5) agencées dans le prolongement des amortisseurs de chocs (3), et dans lequel la portion centrale (4) de la traverse (2) est formée conjointement par une première demi-coque (8) et une deuxième demi-coque (9) configurées pour générer un corps creux (19) une fois assemblées, **caractérise en ce que** la première demi-coque (8) et la deuxième demi-coque (9) comportent respectivement une face intérieure tournée vers l'autre demi-coque (8, 9) et délimitée par des bords périphériques (11, 12, 13, 14, 110, 120, 130, 140), la première demi-coque (8) et la deuxième demi-coque (9) étant assemblées entre elles en une surface de liaison périphérique (18) au niveau des bords périphériques (11, 12, 13, 14, 110, 120, 130, 140) de leurs faces intérieures.

2. Ensemble pare-chocs (1) selon la revendication précédente, dans lequel la première demi-coque (8) comprend une partie centrale (80) et au moins une partie latérale (81), cette partie centrale (80) et cette au moins une partie latérale (81) formant un ensemble monobloc.

3. Ensemble pare-chocs (1) selon l'une quelconque des revendications précédentes, dans lequel la première demi-coque (8) et la deuxième demi-coque (9) sont solidarisées en une surface de liaison interne (20) au niveau d'au moins une nervure (21) ménagée sur au moins l'une des demi-coques (8, 9).

4. Ensemble pare-chocs (1) selon la revendication précédente, dans lequel l'au moins une nervure (21) est ménagée sur la deuxième demi-coque (9).

5. Ensemble pare-chocs (1) selon l'une quelconque des revendications précédentes, comprenant une série de nervures (21) qui s'étendent depuis la deuxième demi-coque (9) jusqu'à la première demi-coque (8).

6. Ensemble pare-chocs (1) selon la revendication précédente, dans lequel des saillies de renforcement (22) s'étendent transversalement entre deux nervures (21) successives de la série de nervures (21).

7. Ensemble pare-chocs (1) selon l'une quelconque des revendications précédentes, dans lequel le corps creux (19) généré par l'assemblage des deux demi-coques (8, 9) s'étend sur toute une dimension transversale de la portion centrale (4) de la traverse (2).

8. Ensemble pare-chocs (1) selon l'une quelconque des revendications précédentes, dans lequel la première demi-coque (8) et/ou la deuxième demi-coque (9) comprennent un matériau composite.

9. Véhicule automobile **caractérisé en ce qu'**il comprend un ensemble pare-chocs (1) selon l'une quelconque des revendications précédentes, les amortisseurs de chocs (3) de cet ensemble pare-chocs (1) étant interposés entre la traverse (2) de l'ensemble pare-chocs (1) et un longeron du véhicule automobile.

## Patentansprüche

1. Stoßfängeranordnung (1) für ein Kraftfahrzeug, welche einen Querträger (2) und zwei Stoßdämpfer (3) umfasst, wobei der Querträger (2) einen mittleren Abschnitt (4) umfasst, der sich zwischen zwei in der Verlängerung der Stoßdämpfer (3) angeordneten seitlichen Abschnitten (5) befindet, und wobei der mittlere Abschnitt (4) des Querträgers (2) von einer ersten Halbschale (8) und einer zweiten Halbschale (9) zusammen gebildet wird, die dafür ausgelegt sind, wenn sie zusammengebaut sind, einen Hohlkörper (19) zu erzeugen, **dadurch gekennzeichnet, dass** die erste Halbschale (8) und die zweite Halbschale (9) jeweils eine Innenseite aufweisen, die der anderen Halbschale (8, 9) zugewandt ist und von Umfangsrändern (11, 12, 13, 14, 110, 120, 130, 140) begrenzt wird, wobei die erste Halbschale (8) und die zweite Halbschale (9) an einer peripheren Verbindungsfläche (18) an den Umfangsrändern (11, 12, 13, 14, 110, 120, 130, 140) ihrer Innenseiten zusammengefügt sind.

2. Stoßfängeranordnung (1) nach dem vorhergehenden Anspruch, wobei die erste Halbschale (8) einen mittleren Teil (80) und wenigstens einen seitlichen Teil (81) umfasst, wobei dieser mittlere Teil (80) und dieser wenigstens eine seitliche Teil (81) eine einstückige Gesamtheit bilden.

3. Stoßfängeranordnung (1) nach einem der vorhergehenden Ansprüche, wobei die erste Halbschale (8) und die zweite Halbschale (9) an einer inneren Verbindungsfläche (20) an wenigstens einer Rippe (21), die an wenigstens einer der Halbschalen (8, 9) ausgebildet ist, fest verbunden sind.

4. Stoßfängeranordnung (1) nach dem vorhergehenden Anspruch, wobei die wenigstens eine Rippe (21) an der zweiten Halbschale (9) ausgebildet ist.

5. Stoßfängeranordnung (1) nach einem der vorhergehenden Ansprüche, welche eine Reihe von Rippen (21) umfasst, die sich von der zweiten Halbschale (9) bis zur ersten Halbschale (8) erstrecken.

6. Stoßfängeranordnung (1) nach dem vorhergehenden Anspruch, wobei Verstärkungsvorsprünge (22) sich quer zwischen zwei aufeinander folgenden Rippen (21) der Reihe von Rippen (21) erstrecken.

7. Stoßfängeranordnung (1) nach einem der vorhergehenden Ansprüche, wobei sich der Hohlkörper (19), der durch den Zusammenbau der zwei Halbschalen (8, 9) erzeugt wird, über eine gesamte Querausdehnung des mittleren Abschnitts (4) des Querträgers (2) erstreckt.

8. Stoßfängeranordnung (1) nach einem der vorhergehenden Ansprüche, wobei die erste Halbschale (8) und/oder die zweite Halbschale (9) einen Verbundwerkstoff umfassen.

9. Kraftfahrzeug, **dadurch gekennzeichnet, dass** es eine Stoßfängeranordnung (1) nach einem der vorhergehenden Ansprüche umfasst, wobei die Stoßdämpfer (3) dieser Stoßfängeranordnung (1) zwischen dem Querträger (2) der Stoßfängeranordnung (1) und einem Längsträger des Kraftfahrzeugs angeordnet sind.

## Claims

1. Bumper assembly (1) for a motor vehicle, comprising a cross-member (2) and two impact absorbers (3), wherein the cross-member (2) has a central portion (4) between two lateral portions (5) arranged in the extension of the impact absorbers (3), and in which the central portion (4) of the cross-member (2) is formed jointly by a first half-shell (8) and a second half-shell (9) configured to generate a hollow body (19) once assembled, **characterized in that** the first half-shell (8) and the second half-shell (9) respectively comprise an inner face facing the other half-shell (8, 9) and delimited by peripheral edges (11, 12, 13, 14, 110, 120, 130, 140), the first half-shell (8) and the second half-shell (9) being joined to one another in a peripheral connection surface (18) at the peripheral edges (11, 12, 13, 14, 110, 120, 130, 140) of their interior faces.

2. Bumper assembly (1) according to the preceding claim, wherein the first half-shell (8) comprises a central part (80) and at least one lateral part (81), this central part (80) and this at least one lateral part (81) forming a monobloc assembly.

3. Bumper assembly (1) according to any one of the preceding claims, wherein the first half-shell (8) and the second half-shell (9) are secured in an internal connection surface (20) at at least one rib (21) formed on at least one of the half-shells (8, 9) .

4. Bumper assembly (1) according to the preceding claim, wherein the at least one rib (21) is created on the second half-shell (9).

5. Bumper assembly (1) according to any one of the preceding claims, comprising a row of ribs (21) which extend from the second half-shell (9) to the first half-shell (8) .

6. Bumper assembly (1) according to the preceding claim, wherein reinforcing projections (22) extend transversely between two successive ribs (21) of the row of ribs (21).

7. Bumper assembly (1) according to any one of the preceding claims, wherein the hollow body (19) created by the joining of the two half-shells (8, 9) extends over a whole transverse dimension of the central portion (4) of the cross-member (2).

8. Bumper assembly (1) according to any one of the preceding claims, wherein the first half-shell (8) and/or the second half-shell (9) comprise a composite material.

9. Motor vehicle, **characterized in that** it comprises a bumper assembly (1) according to any one of the preceding claims, the impact absorbers (3) of this bumper assembly (1) being interposed between the cross-member (2) of the bumper assembly (1) and a side member of the motor vehicle.
